# FASCICULE DE BREVET EUROPEEN

(11) **EP 2 647 177 B1**
(45) Date de publication et mention de la délivrance du brevet: **23.08.2017**
(21) Numéro de dépôt: 11788468.4
(22) Date de dépôt: 29.11.2011
(51) Int. Cl.: H04L 29/08

(54) **PROCÉDÉ ET DISPOSITIF POUR L'APPAIRAGE D'UN TERMINAL ET D'UN COMPTE UTILISATEUR**
VERFAHREN UND VORRICHTUNG ZUR ZUORDNUNG EINES ENDGERÄTS ZU EINEM BENUTZERKONTO
METHOD AND ENTITY FOR PAIRING A TERMINAL AND A USER ACCOUNT

(30) Priorité: 03.12.2010 FR 1060051
(43) Date de publication de la demande: 09.10.2013
(73) Titulaire: Sagemcom Documents SAS, 92500 Rueil Malmaison (FR)
(72) Inventeur: SABATIER, Pierre, F-92500 Rueil Malmaison (FR); SARTORI, David, F-92500 Rueil Malmaison (FR)
(74) Mandataire: Le Guen-Maillet
(86) Numéro de dépôt international: PCT/EP2011/071230
(87) Numéro de publication internationale: WO 2012/072604

(56) Documents cités:
- US-A1- 2006 136 559
- BOULTON UBIQUITY SOFTWARE CORPORATION J ROSENBERG CISCO SYSTEMS G CAMARILLO ERICSSON C: "Best Current Practices for NAT Traversal for SIP; draft-ietf-sipping-nat-scenarios-03.txt", IETF STANDARD-WORKING-DRAFT, INTERNET ENGINEERING TASK FORCE, IETF, CH, vol. sipping, no. 3, 24 octobre 2005 (2005-10-24), XP015042712, ISSN: 0000-0004

## Description

La présente invention concerne l'appairage d'un terminal, dit terminal à appairer, et d'un compte utilisateur d'un service mis en oeuvre par au moins un dispositif connecté à un premier réseau de communication, ledit terminal à appairer étant connecté via un second réseau de communication à une passerelle qui relie les premier et second réseaux de communication.

Dans le cadre de services, tels que des services d'archivage de documents, il existe des solutions qui permettent de mettre en relation un terminal utilisateur avec un compte utilisateur défini auprès de ces services. Par exemple, un tel service permet de stocker des documents sur des serveurs à mémoire de masse accessibles via le réseau Internet. Ces documents sont par exemple des documents papier numérisés, des photos, voire des vidéos, et les terminaux utilisateur sont par exemple respectivement de type scanneur, de type appareil photo ou de type caméra.

Le compte utilisateur permet à un utilisateur d'accéder, par exemple via un navigateur Web, à ces services. Il lui permet par exemple d'accéder à des documents qu'il a archivés à partir de son terminal utilisateur et de les manipuler. L'utilisateur accède généralement à ce compte via un ordinateur personnel PC (*Personal Computer* en anglais), un ordinateur personnel de type tablette *(Tablet Personal Computer* en anglais) ou autre terminal doté d'un navigateur Web. Ce terminal est alors distinct des terminaux utilisateur qui fournissent des données à traiter par les services, tels que ceux qui ont généré des documents archivés, qui eux ne permettent pas de manipuler aisément les documents archivés.

Il est alors pratique pour l'utilisateur de pouvoir transférer ces documents sur de tels serveurs, directement à partir de ces terminaux utilisateur. De tels terminaux sont généralement munis respectivement d'au moins une interface réseau supportant le protocole Internet IP (*Internet Protocol* en anglais), tel que des interfaces conformes au standard IEEE 802.3, plus connu sous le nom d'Ethernet, ou au standard IEEE 802.11, plus connu sous le nom de WiFi (marque déposée), et qui permettent d'accéder à l'Internet à travers une passerelle domestique (*Residential Gateway* en anglais). Les données à traitées par les services sont alors transmises à au moins un dispositif mettant en oeuvre les services concernés, tel qu'un serveur à mémoire de masse grâce, par exemple grâce un protocole de contrôle de transmission TCP (*Transmission Control Protocol* en anglais), défini par les documents RFC 791 et 793.

Pour pouvoir bénéficier de ces services, directement à partir de terminaux utilisateur, il est nécessaire d'appairer chaque terminal utilisateur avec le compte utilisateur concerné. Une méthode consiste à requérir que l'utilisateur saisisse le numéro de série du terminal dans un espace réservé de son compte utilisateur. Cette opération peut s'avérer fastidieuse et sujette à erreurs de saisie, et en conséquence être coûteuse en support technique.

Il est souhaitable de pallier ces différents inconvénients de l'état de la technique.

Il est notamment souhaitable de fournir une solution qui permette, dans le cadre de services, d'appairer un terminal utilisateur fournissant des données avec un compte utilisateur à partir duquel ces données traitées par le service peuvent être consultée, et ce, de manière transparente pour l'utilisateur.

Il est notamment souhaitable de fournir une telle solution qui soit simple à mettre en oeuvre.

Par ailleurs, le document BOULTON UBIQUITY SOFTWARE CORPORATION J ROSENBERG CISCO SYSTEMS G CAMARILLO FRICSSON C. "Best Current Practices for NAT Traversal for SIP: draft-ietf-sipping-nat-scenarios-03.txt". IEIF STANDARD-WORKING-DRAFT, INTERNET ENGINEERING TASK FORCE IF CIL, vol, sipping. no. 3.24 octobre 2005 (2005-10-24), décrit un terminal dans un réseau privé qui obtient son adresse publique en utilisant le protocole STUN et utilise cette adresse dans un message SDP.
Document US20060136559 divulgue en capteur d'image qui télecharge un image capté sur un compte d'utilisateur. L'invention est définie par l'objet des revendications indépendantes. Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un mode de réalisation d'un service dans le cadre duquel l'invention peut être mise en oeuvre ;
- la Fig. 2 illustre schématiquement une architecture applicable à un terminal à appairer, à un dispositif d'appairage et à un serveur, tels qu'ils peuvent être mis en oeuvre dans le cadre du service de la Fig. 1 ;
- la Fig. 3 illustre schématiquement un algorithme d'appairage, tel qu'il peut être mis en oeuvre par le système de la Fig. 1 ;
- la Fig. 4 illustre schématiquement une séquence d'échange de messages, tel qu'elle peut être mise en oeuvre dans le cadre du service de la Fig. 1, selon un mode de réalisation de l'invention ;
- la Fig. 5 illustre schématiquement un algorithme d'utilisation du service de la Fig. 1, dans un mode de réalisation de la présente invention.

Pour permettre, dans le cadre de services, tels que des services d'archivage de documents générés à partir d'un terminal utilisateur, d'appairer, de manière transparente pour l'utilisateur, ce terminal utilisateur avec un compte utilisateur à partir duquel les données traitées par le service peuvent être consultées, il est proposé d'identifier le terminal utilisateur grâce à son adresse IP publique, c'est-à-dire celle utilisée par une passerelle via laquelle le terminal utilisateur se connecte à un réseau tel que l'Internet. Ensuite, l'utilisateur accède à son compte utilisateur grâce à un terminal de configuration qui utilise cette même passerelle pour se connecter au réseau. Le terminal de configuration dispose alors de la même adresse IP publique que le terminal utilisateur. C'est alors grâce à cette adresse IP publique que l'appairage du terminal utilisateur et du compte utilisateur est réalisé.

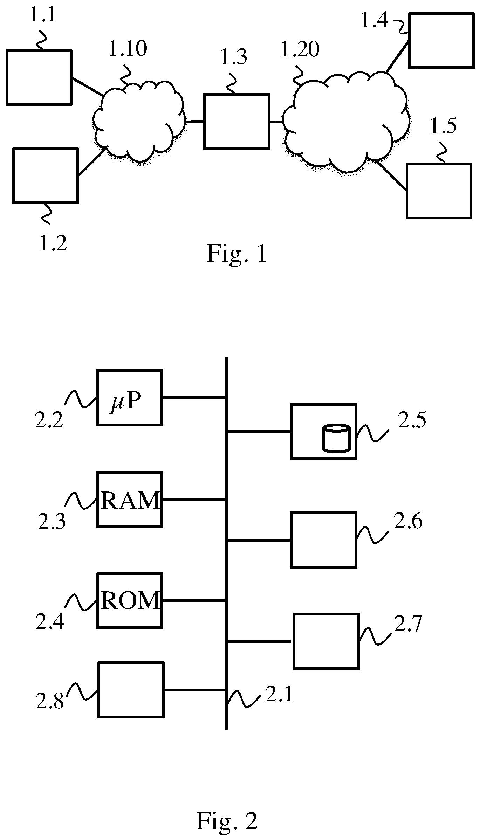

La Fig. 1 illustre schématiquement un mode de réalisation d'un service dans le cadre duquel l'invention peut être mise en oeuvre.

Un terminal utilisateur 1.1 est un terminal à appairer avec un compte utilisateur sur un serveur 1.5, tel qu'un serveur d'archivage sur lequel des documents sont destinés à être archivés. Le terminal utilisateur 1.1 est par exemple un scanneur utilisé pour dématérialiser des documents papier, afin d'obtenir ces documents sous forme électronique. Un tel scanneur génère ainsi par exemple des documents au format portable de document PDF *(Portable Document Format* en anglais). Le terminal utilisateur 1.1 peut aussi être un appareil photo, une caméra ou tout autre appareil permettant de générer des documents archivables sous forme électronique.

Le terminal utilisateur 1.1 est connecté à une passerelle 1.3. Cette passerelle est préférentiellement une passerelle domestique, telle qu'un routeur ADSL *(Asymmetric Digital Subscriber Line* en anglais ou *Liaison Numérique Asymétrique d'Abonné* en français) via un réseau local LAN 1.10 (*Local Area Network* en anglais). Ce réseau local peut fonctionner selon tout type de technologie filaire, par exemple Ethernet, ou sans fil, par exemple WiFi. La passerelle domestique 1.3 permet au terminal utilisateur d'accéder à l'Internet 1.20.

Un terminal de configuration 1.2 est aussi connecté à la passerelle domestique 1.3 via le réseau local 1.10. La passerelle domestique 1.3 permet alors aussi au terminal de configuration 1.2 d'accéder à l'Internet 1.20. Ce terminal de configuration 1.2 permet à l'utilisateur d'accéder à un compte utilisateur dont il dispose sur le serveur 1.5 accessible via le réseau Internet 1.20. Grâce à ce compte utilisateur, l'utilisateur peut souscrire à des services proposés par le serveur 1.5, modifier des paramètres liés aux services auxquels il a souscrit et par la suite accéder aux données fournies par le terminal utilisateur et traitées par le service, comme par exemple visualiser et manipuler des documents archivés.

La passerelle domestique 1.3 dispose d'une fonction de translation d'adresses réseau NAT (*Network Address Translator* en anglais) lorsque le terminal utilisateur 1.1 ou le terminal de configuration 1.2 accède à l'Internet. Le terminal utilisateur 1.1 et le terminal de configuration 1.2 utilisent des adresses IP privées qui ne sont pas routables sur l'Internet. D'une manière générale, la fonction NAT mappe chacune de ces adresses IP privées utilisées sur le réseau local LAN 1.10 sur des ports TCP ou UDP des communications établie sur l'Internet par la passerelle 1.3 pour le compte de dispositifs connectés au réseau local LAN 1.10. Une unique adresse IP publique est alors utilisée par la passerelle 1.3 pour que le terminal utilisateur 1.1 et le terminal de configuration 1.2 communiquent avec d'autres équipements via l'Internet.

Le service est mis en oeuvre par un système qui comporte un dispositif d'appairage 1.4 connecté au réseau Internet 1.20. Le dispositif d'appairage 1.4 effectue l'appairage du terminal utilisateur 1.1 avec le compte utilisateur concerné. Dans la suite de la description, le dispositif d'appairage 1.4 est distinct du serveur 1.5. Dans une variante de réalisation, le dispositif d'appairage 1.4 est intégré au serveur 1.5.

Dans un mode de réalisation préféré, un réseau privé virtuel VPN (*Virtual Private Network* en anglais) est établi entre le terminal utilisateur 1.1, le dispositif d'appairage 1.4 et le serveur 1.5.

L'invention décrite ici plus particulièrement dans le cadre d'un réseau local LAN 1.10 connecté à l'Internet 1.20 via une passerelle peut être mise en oeuvre de manière similaire dans le cadre plus général de premier et second réseaux de communication interconnectés par une passerelle effectuant une translation d'adresse à l'aide d'une adresse publique routable sur le premier réseau de communication, le terminal à appairer étant connecté sur le second réseau de communication.

La Fig. 2 illustre schématiquement une architecture applicable au terminal utilisateur 1.1, au dispositif d'appairage 1.4 et au serveur 1.5. Une telle architecture comporte, reliés par un bus de communication 2.1 :
- un processeur, micro-processeur (noté µP), microcontrôleur ou CPU (*Central Processing Unit* en anglais ou *Unité Centrale de Traitement* en français) 2.2 ;
- une mémoire vive RAM *(Random Access Memory* en anglais ou *Mémoire à Accès Aléatoire* en français) 2.3 ;
- une mémoire morte ROM *(Read Only Memory* en anglais ou *Mémoire à Lecture Seule* en français) 2.4 ;
- une interface de communication 2.6 avec le réseau local LAN 1.10 ou avec le réseau Internet 1.20, selon le cas ;
- une interface 2.7 vers des fonctions additionnelles ;
- éventuellement, selon le cas, une unité de stockage 2.5 ; et
- éventuellement, un lecteur 2.8 de medium de stockage, tel qu'un lecteur de CD-ROM (pour *Compact Disk Read Only Memory* en anglais ou *Disque Compact Mémoire à Lecture Seule* en français).

L'interface 2.7 permet l'accès à des fonctions additionnelles, dépendantes du dispositif considéré, comme par exemple une fonction d'interface homme machine, une fonction de contrôle de mécanismes de numérisation,...

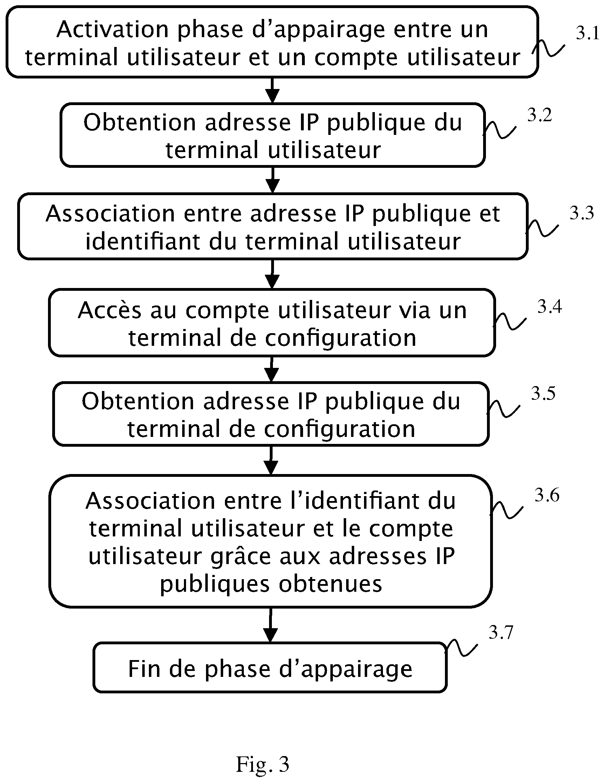

Le processeur 2.2 est capable d'exécuter des instructions chargées dans la RAM 2.3 à partir de la ROM 2.4, d'un support de stockage, tel qu'un disque dur ou un CD-ROM, ou d'un réseau de communication. Lorsque le dispositif de communication est mis sous tension, le processeur 2.2 est capable de lire de la RAM 2.3 des instructions et de les exécuter. Ces instructions forment un programme d'ordinateur qui cause la mise en oeuvre, par le processeur 2.2, de tout ou partie des étapes et algorithmes décrits ci-après en relation avec les Figs. 3 à 5.

Tout ou partie des algorithmes décrits ci-après en relation avec les Figs. 3 à 5 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

La Fig. 3 illustre schématiquement un algorithme d'appairage, tel qu'il peut être mis en oeuvre dans le cadre du service de la Fig. 1.

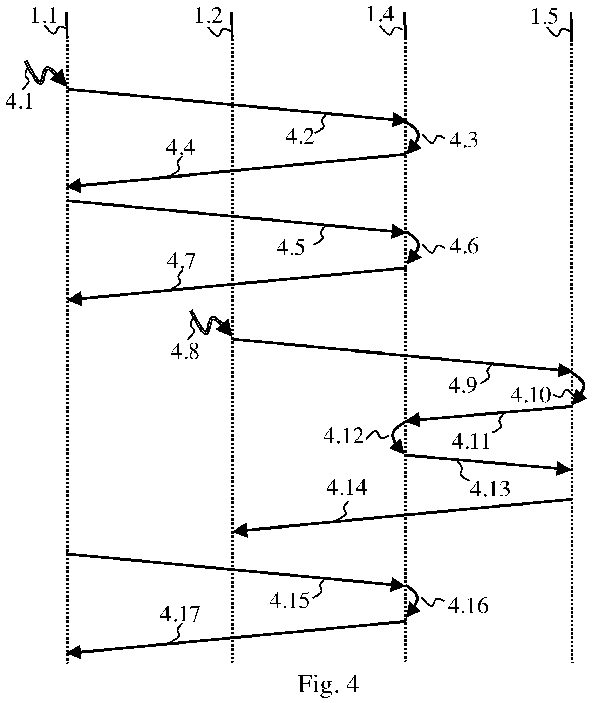

Dans une étape 3.1, une phase d'appairage entre le terminal utilisateur 1.1 et le compte utilisateur des services est activée, ou initiée. Au moins un mode de réalisation de cette étape est présenté ci-après en relation avec l'étape 4.1 de la Fig. 4.

Dans une étape 3.2 suivante, l'adresse IP publique du terminal utilisateur 1.1 est obtenue par le dispositif d'appairage 1.4. Au moins un mode de réalisation de cette étape est présenté ci-après en relation avec la succession d'étapes 4.2 à 4.5 de la Fig. 4.

Dans une étape 3.3 suivante, le dispositif d'appairage 1.4 associe cette adresse IP publique et un identifiant du terminal utilisateur 1.1.

Dans une étape 3.4 suivante, l'utilisateur utilise le terminal de configuration 1.2 pour accéder à son compte utilisateur auprès des services. L'utilisateur active dans son compte utilisateur un mécanisme qui va effectuer l'appairage du côté du compte utilisateur. Dans un mode de réalisation préféré, ce mécanisme est activé lorsque l'utilisateur souscrit à un service, c'est-à-dire lors d'une inscription du compte utilisateur à un service mis en oeuvre par le serveur 1.5. Le dispositif d'appairage 1.4 détecte cet accès au compte utilisateur, par exemple par une notification dédiée qui lui est transmise par le serveur 1.5.

Dans une étape 3.5 suivante, l'adresse IP publique du terminal utilisateur 1.1, via lequel l'utilisateur accède actuellement à son compte utilisateur, est obtenue par le dispositif d'appairage 1.4. Au moins un mode de réalisation de cette étape est présenté ci-après en relation avec la succession d'étapes 4.9 à 4.11 de la Fig. 4.

Dans une étape 3.6 suivante, le dispositif d'appairage 1.4 effectue l'appairage du terminal utilisateur 1.1 avec le compte utilisateur, grâce aux adresses IP publiques obtenues lors des étapes 3.2 et 3.5. Un tel appairage peut être en effet effectué car d'une part le dispositif d'appairage 1.4 dispose d'une correspondance entre l'identifiant du terminal utilisateur 1.1 et son adresse IP publique, et d'une correspondance entre le compte utilisateur et l'adresse IP publique du terminal de configuration 1.2 avec lequel l'utilisateur a accédé au compte utilisateur. Comme ces adresses IP publiques coïncident, car le terminal utilisateur 1.1 et le terminal de configuration 1.2 sont connectés au même réseau local LAN 1.10, le dispositif d'appairage 1.4 dispose des informations de correspondance nécessaires pour appairer le terminal utilisateur 1.1 et le compte utilisateur.

Dans une étape 3.7 suivante, il est mis fin à la phase d'appairage.

La Fig. 4 illustre schématiquement une séquence d'échange de messages, tel qu'elle peut être mise en oeuvre dans le cadre du service de la Fig. 1, selon un mode de réalisation de l'invention.

Dans une étape 4.1, la phase d'appairage mentionnée à l'étape 3.1 est activée. Pour ce faire, le terminal utilisateur 1.1 comporte des moyens d'initiation de cette phase d'appairage. Elle est par exemple initiée par appui, par l'utilisateur, sur un bouton dédié du terminal utilisateur 1.1. Dans une variante de réalisation, elle peut être automatiquement initiée par le terminal utilisateur 1.1 lorsque celui-ci est branché pour la première fois au réseau local LAN 1.10.

Dans une étape 4.2 suivante, le terminal utilisateur 1.1 transmet au dispositif d'appairage 1.4 une requête conforme au standard STUN (*Simple Traversal of UDP through NATs* en anglais ou *Traversée Simple du Protocole de Datagramme Utilisateur à travers des Translateurs d'Adresses Réseau* en français), décrit dans les documents RFC 3489 et RFC 5389. Dans une étape 4.3 suivante, le dispositif d'appairage 1.4 détermine l'adresse IP du terminal utilisateur 1.1, telle qu'elle apparaît dans le champ d'adresse IP source de la requête envoyée par le terminal utilisateur 1.1 et modifiée par la passerelle domestique 1.3. Dans une étape 4.4 suivante, le dispositif d'appairage 1.4 transmet au terminal utilisateur 1.1 un message contenant l'adresse IP déterminée à l'étape 4.3. Pour pouvoir échanger des messages avec le dispositif d'appairage 1.4, le terminal utilisateur 1.1 a la connaissance de l'adresse IP, routable sur l'Internet 1.20, du dispositif d'appairage 1.4. Cette adresse IP peut être préconfigurée, par exemple à l'usine ou par un technicien installateur, dans une zone mémoire dédiée du terminal utilisateur 1.1.

Pour mettre en oeuvre les étapes 4.2 à 4.4, un serveur conforme au standard STUN est mis en oeuvre dans le dispositif d'appairage 1.4 et un client conforme au standard STUN est mis en oeuvre dans le terminal utilisateur 1.1. Le serveur STUN reçoit des requêtes en provenance du client STUN. En réponse à chacune de ces requêtes, le serveur STUN transmet un message à destination du client STUN, ce message contenant l'adresse IP source de la requête concernée, c'est-à-dire celle du terminal utilisateur 1.1, telle qu'elle est connue à l'extérieur du réseau local LAN 1.10. En d'autres termes, le serveur STUN transmet dans un champ de données utiles de ce message l'adresse IP publique utilisée par la passerelle domestique 1.3.

Dans une variante de réalisation, le serveur STUN est distinct du dispositif d'appairage 1.4.

Dans une autre variante de réalisation, un serveur HTTP (*HyperText Transfer Protocol* en anglais) est mis en oeuvre à la place du serveur STUN et un client HTTP est mis en oeuvre à la place du client STUN. De la même manière, le serveur HTTP détermine l'adresse IP source de la requête émise par le client HTTP et modifiée par la passerelle domestique 1.3.

Dans encore une autre variante de réalisation, le dispositif d'appairage 1.4 détermine l'adresse IP publique du terminal utilisateur 1.1 par analyse des messages échangés lors de la mise en ouvre du réseau VPN entre le dispositif d'appairage 1.4 et le terminal utilisateur 1.1. De la même manière, l'adresse IP source des messages reçus en provenance du terminal utilisateur 1.1 contient l'adresse IP publique recherchée.

Dans une étape 4.5 suivante, le terminal utilisateur 1.1 transmet au dispositif d'appairage 1.4 un message, appelé *presenceRequest,* comportant, dans un champ de données utiles, l'adresse IP publique qu'il a reçu lors de l'étape 4.4, ainsi qu'en association un identifiant unique du terminal utilisateur 1.1. Cet identifiant unique, appelé *boxID,* est chargé à l'usine lors de la fabrication du terminal utilisateur 1.1 et n'est pas modifiable. Pour éviter qu'il puisse être facilement obtenu par analyse du contenu du terminal utilisateur 1.1, cet identifiant est préférentiellement stocké de manière chiffrée, par exemple par mise en oeuvre d'un chiffrement cryptographique de type SHA-1 *(Secure Hash Algorithm-1* en anglais ou *Algorithme de Hachage Sécurisé-1* en français) conçu par l'Agence de Sécurité Nationale NSA (*National Security Agency* en anglais) des Etats-Unis. L'adresse IP publique et l'identifiant *boxID* peuvent être transmis en association dans un même message ou dans des messages séparés.

De manière préférentielle, contrairement aux messages conformes au standard STUN, le message envoyé lors de l'étape 4.5 est transmis de manière sécurisée, par exemple par utilisation du protocole de sécurité de couche de transport TLS *(Transport Layer Security* en anglais) défini par le document RFC 4346.

Lors d'une étape 4.6 suivante, le dispositif d'appairage 1.4 stocke les informations, adresse IP publique et *boxID,* contenues dans le message transmis lors de l'étape 4.5. Dans une étape 4.7 suivante, il accuse réception du message *presenceRequest* auprès du terminal utilisateur 1.1. L'utilisateur est préférentiellement averti de cet accusé de réception. Par exemple, le terminal utilisateur 1.1 affiche une icône correspondante sur un écran ou allume un voyant.

Lors d'une étape 4.8 suivante, l'utilisateur accède à son compte utilisateur auprès du serveur 1.5 via le terminal de configuration 1.2. Le terminal de configuration 1.2 émet alors, lors d'une étape 4.9, une requête à destination du serveur 1.5. Par exemple, cette requête correspond à une inscription de l'utilisateur auprès du service. Comme elle est modifiée par la passerelle domestique 1.3, au même titre que les messages à destination de l'Internet 1.20 transmis par le terminal utilisateur 1.1, cette requête contient l'adresse IP publique du terminal de configuration 1.2. Comme déjà mentionné, cette adresse IP publique est la même que celle du terminal utilisateur 1.1, telle qu'elle a été obtenue par le dispositif d'appairage 1.4 lors de l'étape 4.6. Lors d'une étape 4.10 suivante, le serveur 1.5 obtient cette adresse IP publique ainsi qu'un identifiant du compte utilisateur, appelé *userID.* Le serveur 1.5 transmet ensuite au dispositif d'appairage 1.4, lors d'une étape 4.11, un message *subscribeRequest* contenant, dans un champ de données utiles, cette adresse IP publique et cet identifiant du compteur utilisateur.

Lors d'une étape 4.12 suivante, le dispositif d'appairage 1.4 peut effectuer l'appairage du terminal utilisateur, identifié par l'identifiant *boxID,* avec le compte utilisateur, identifié par l'identifiant *userID.* Pour ce faire, il recherche dans un ensemble d'adresses IP associées à des identifiants respectifs de terminaux à appairer, l'identifiant *boxID* qui est associé à l'adresse IP publique qui coïncide avec celle associée à l'identifiant *userID* reçu à l'étape 4.11. Une fois trouvé, l'identifiant *boxID* est alors stocké en correspondance avec l'identifiant *userID.* D'autres identifiants peuvent aussi être stockés lors de cette procédure, tel qu'un identifiant de service et/ou un identifiant de fournisseur du service, pour permettre à un utilisateur de créer des comptes utilisateur auprès de plusieurs fournisseurs de service.

Lors d'une étape 4.13 suivante, le dispositif d'appairage 1.4 transmet, au serveur 1.5, un acquittement contenant une indication du succès ou de l'échec de l'opération d'appairage réalisée à l'étape 4.12. Cette indication est transmise, lors d'une étape 4.14 suivante, du serveur 1.5 à destination du terminal de configuration 1.2, pour affichage du résultat à l'utilisateur.

Une situation d'erreur peut survenir si l'utilisateur n'effectue pas l'action décrite en relation avec l'étape 4.1 avant d'effectuer celle décrite en relation avec l'étape 4.8. Une autre situation d'erreur peut survenir si l'utilisateur ne réalise pas l'action décrite en relation avec l'étape 4.8 dans une période temporelle prédéfinie à compter de l'étape 4.1. En effet, certains fournisseurs d'accès à l'Internet 1.20 attribuent dynamiquement les adresses IP à leurs passerelles. Ainsi, il se peut que l'adresse IP publique utilisées pour les dispositifs connectés au réseau local LAN 1.10 soit changée au fil du temps, et qu'en conséquence l'appairage de l'étape 4.12 ne puisse être effectué. Il est alors nécessaire de réitérer la séquence d'échange de messages à compter de l'étape 4.1.

Pour prendre en compte le fait que certains fournisseurs d'accès à l'Internet 1.20 attribuent dynamiquement les adresses IP à leurs passerelles, le dispositif d'appairage 1.4 met préférentiellement en oeuvre un mécanisme de gestion de péremption des informations stockées à l'étape 4.6. Ainsi, chaque information stockée lors de cette étape est associée à un instant de péremption, et cette information est supprimée lorsque le dispositif d'appairage 1.4 constate que l'instant de péremption est dépassé.

De la même manière, le dispositif d'appairage 1.4 met préférentiellement en oeuvre un mécanisme d'écrasement des données stockées à l'étape 4.6 s'il reçoit un nouveau message *presenceRequest* qui contient un identifiant *boxID* déjà stocké mais qui n'a pas encore fait l'objet d'un appairage effectif.

Lors d'une étape 4.15 suivante, le terminal utilisateur 1.1 transmet des requêtes de paramétrage du service relatif à l'appairage du terminal utilisateur 1.1 et du compte utilisateur. Ces requêtes sont traitées par le dispositif d'appairage 1.4 lors d'une étape 4.16 suivante. Le dispositif d'appairage 1.4 retourne alors en réponse, lors d'une étape 4.17 suivante, un acquittement de la requête transmise lors de l'étape 4.15.

L'étape 4.15 peut être déclenchée à intervalles réguliers par le terminal utilisateur 1.1 après exécution de l'étape 4.7. Ainsi, tant que l'appairage n'est pas effectivement réalisé lors de l'étape 4.12, le dispositif d'appairage 1.4 retourne, lors de l'étape 4.17, un code d'erreur. Les étapes 4.15 à 4.17 sont alors réitérées jusqu'à ce que l'acquittement transmis lors de l'étape 4.17 ne contienne plus de code d'erreur, ou que l'utilisateur interrompe les échanges en activant une commande dédiée sur un panneau de contrôle du terminal utilisateur 1.1. Dans une variante de réalisation, l'étape 4.15 est déclenchée par l'utilisateur par activation d'une commande dédiée sur le panneau de contrôle du terminal utilisateur 1.1.

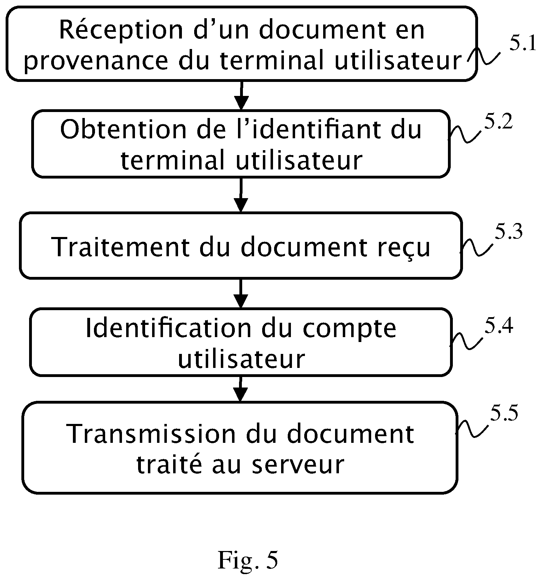

La Fig. 5 illustre schématiquement un algorithme d'utilisation du service, tel qu'il peut être mis en oeuvre par le dispositif d'appairage 1.4, une fois effectué l'appairage du terminal utilisateur 1.1 et du compteur utilisateur. Le dispositif d'appairage 1.4 sert dans ce cadre d'intermédiaire entre le terminal utilisateur 1.1 et le serveur 1.5.

L'algorithme de la Fig. 5 est mis en oeuvre dans le cadre d'un services d'archivage de documents, mais peut être mis en oeuvre dans d'autres types de service adaptés pour traiter des données fournies par des terminaux utilisateurs, tel que le terminal utilisateur 1.1.

Dans une étape 5.1, le dispositif d'appairage 1.4 reçoit un document en provenance du terminal utilisateur 1.1. En association avec ce document, le terminal utilisateur 1.1 fournit au dispositif d'appairage 1.4 son identifiant *boxID.* Le dispositif d'appairage 1.4 obtient cet identifiant dans une étape 5.2 suivante. Dans une étape 5.3 suivante, le dispositif d'appairage 1.4 effectue un traitement sur le document reçu. Un tel traitement peut par exemple consister à recadrer le document, lorsque celui-ci est une version électronique d'un document papier numérisé par un scanneur, ou à le retoucher lorsque le document est une photo numérique. Dans une étape 5.4 suivante, le dispositif d'appairage 1.4 identifie le compte utilisateur du service qui a fait l'objet d'un appairage avec le terminal utilisateur identifié par l'identifiant *boxID.*

Dans une variante de réalisation, les étapes 5.3 et 5.4 sont inversées.

Dans une étape 5.5 suivante, le dispositif d'appairage 1.4 transmet au serveur 1.5 le document traité lors de l'étape 5.3. Le document est ainsi transmis pour archivage en association avec l'identifiant de compte utilisateur obtenu lors de l'étape 5.4.

L'utilisateur peut alors accéder au document ainsi traité et archivé à partir d'un terminal lui donnant accès aux services, par exemple un terminal disposant d'un navigateur Web, par le biais de son compte utilisateur. Ce terminal n'est alors pas nécessairement connecté au réseau local LAN 1.10 où est connecté le terminal utilisateur 1.1 qui a transmis le document pour archivage.

## Revendications

1. Procédé d'appairage d'un terminal utilisateur (1.1) et d'un compte utilisateur sur un serveur (1.5), le procédé étant mis en oeuvre par au moins un dispositif d'appairage (1.4) connecté à un premier réseau de communication (1.20), ledit premier terminal étant connecté via un second réseau de communication (1.10) à une passerelle (1.3) qui relie les premier et second réseaux de communication en effectuant une translation d'adresses à l'aide d'une adresse publique routable sur le premier réseau de communication, **caractérisé en ce que** ledit dispositif d'appairage (1.4) effectue des étapes :
- de réception (3.2) d'un message comprenant ladite adresse publique en association avec un identifiant du terminal utilisateur (1.1) ;
- d'association de l'adresse publique et de l'identifiant du terminal utilisateur (1.1) avec un instant de péremption ;
- de suppression de l'adresse publique et de l'identifiant du terminal utilisateur (1.1) si l'instant de péremption est dépassé ;
- de réception (3.4), en provenance du serveur (1.5), d'une notification d'accès audit compte utilisateur, ledit accès étant effectué à partir d'un terminal de configuration (1.2), distinct du terminal utilisateur (1.1) et connecté au second réseau de communication, la notification comprenant une adresse dudit terminal de configuration (1.2) routable sur ledit premier réseau de communication et un identifiant du compte utilisateur ;
- d'appairage (3.6) du terminal utilisateur (1.1) et dudit compte utilisateur en appairant l'identifiant du terminal utilisateur (1.1) avec un identifiant du compte utilisateur si l'adresse dudit terminal de configuration (1.2) coïncide avec ladite adresse publique.

2. Procédé d'appairage selon la revendication 1, **caractérisé en ce qu'**il comporte une étape d'obtention (4.4), par ledit terminal utilisateur (1.1), de ladite adresse publique auprès d'un dispositif (1.4) connecté audit premier réseau de communication.

3. Procédé d'appairage selon la revendication 1, **caractérisé en ce que** l'étape d'appairage comporte une étape de recherche, parmi un ensemble d'adresses publiques stockées par ledit dispositif d'appairage (1.4) et associées respectivement à des identifiants de terminaux utilisateur, de ladite adresse dudit terminal de configuration (1.2).

4. Procédé d'appairage selon l'une quelconque des revendications 1 à 3, **caractérisé en ce que** l'accès audit compte utilisateur consiste en une inscription du compte utilisateur à un service mis en oeuvre par le serveur (1.5)..

5. Dispositif d'appairage (1.4) adapté pour appairer un terminal utilisateur (1.1) et un compte utilisateur d'un serveur (1.5), ledit dispositif d'appairage (1.4) étant connecté à un premier réseau de communication (1.20), ledit terminal utilisateur (1.1) étant connecté via un second réseau de communication (1.10) à une passerelle (1.3) qui relie les premier et second réseaux de communication en effectuant une translation d'adresses à l'aide d'une adresse publique routable sur le premier réseau de communication, **caractérisé en ce qu'**il comporte :
- des moyens de réception (3.2) d'un message comprenant ladite adresse publique et un identifiant du terminal utilisateur (1.1) ;
- des moyens d'association de l'adresse publique et de l'identifiant du terminal utilisateur (1.1) avec un instant de péremption ;
- des moyens de suppression de l'adresse publique et de l'identifiant du terminal utilisateur (1.1) lorsque l'instant de péremption est dépassé ;
- des moyens de réception (3.4), en provenance du serveur (1.5), d'une notification d'accès audit compte utilisateur, ledit accès étant effectué à partir d'un terminal de configuration (1.2), distinct du terminal utilisateur (1.1) et connecté au second réseau de communication, la notification comprenant une adresse du terminal de configuration (1.2) routable sur ledit premier réseau de communication et un identifiant du compte utilisateur ;
- des moyens d'appairage (3.6) du terminal utilisateur (1.1) et dudit compte utilisateur par appairage de l'identifiant du terminal utilisateur (1.1) avec l'identifiant du compte utilisateur, si l'adresse dudit terminal de configuration (1.2) coïncide avec ladite adresse publique.

6. Système (1.4, 1.5), **caractérisé en ce qu'**il comporte :
- un dispositif d'appairage (1.4) selon la revendication 5, et
- un serveur (1.5) sur lequel se trouve le compte utilisateur, le serveur (1.5) comportant :
- des moyens de détection de l'accès audit compte utilisateur effectué à partir d'un terminal de configuration (1.2), et
- des moyens de transmission de la notification d'accès au dispositif d'appairage (1.4).

7. Programme d'ordinateur, **caractérisé en ce qu'**il comprend des instructions pour mettre en oeuvre, par un dispositif d'appairage (1.4) mettant en oeuvre un service, le procédé selon la revendication 1, lorsque ledit programme est exécuté par un processeur du dispositif d'appairage (1.4).

8. Moyens de stockage, **caractérisé en ce qu'**ils stockent un programme d'ordinateur comprenant des instructions pour mettre en oeuvre, par un dispositif d'appairage (1.4) mettant en oeuvre un service, le procédé selon la revendication 1, lorsque ledit programme est exécuté par un processeur dudit dispositif d'appairage (1.4)

## Patentansprüche

1. Verfahren zur Zuordnung eines Benutzerendgerätes (1.1) zu einem Benutzerkonto auf einem Server (1.5), wobei das Verfahren durch mindestens eine Zuordnungsvorrichtung (1.4) umgesetzt wird, die an ein erstes Kommunikationsnetz (1.20) angeschlossen ist, wobei das erste Endgerät über ein zweites Kommunikationsnetz (1.10) an eine Gateway (1.3) angeschlossen ist, die das erste und zweite Kommunikationsnetz verbindet, indem sie eine Adressumsetzung mit Hilfe von einer öffentlichen Adresse durchführt, die über das erste Kommunikationsnetz weiterleitbar ist, **dadurch gekennzeichnet, dass** die Zuordnungsvorrichtung (1.4) die folgenden Schritte durchführt:
- Empfangen (3.2) von einer Nachricht, die die öffentliche Adresse in Verbindung mit einer Kennung des Benutzerendgerätes (1.1) aufweist,
- Verbinden der öffentlichen Adresse und der Kennung des Benutzerendgerätes (1.1) mit einem Ablaufdatum,
- Löschen der öffentlichen Adresse und der Kennung des Benutzerendgerätes (1.1), wenn das Ablaufdatum überschritten ist,
- Empfangen (3.4) von dem Server (1.5) einer Benachrichtigung des Zugangs zu dem Benutzerkonto, wobei der Zugang ausgehend von einem Konfigurationsendgerät (1.2) erfolgt, das von dem Benutzerendgerät (1.1) verschieden ist und an das zweite Kommunikationsnetz angeschlossen ist, wobei die Benachrichtigung eine Adresse des Konfigurationsendgerätes (1.2), die über das erste Kommunikationsnetz weiterleitbar ist, und eine Kennung des Benutzerkontos aufweist,
- Zuordnen (3.6) des Benutzerendgerätes (1.1) zu dem Benutzerkonto, indem die Kennung des Benutzerendgerätes (1.1) mit einer Kennung des Benutzerkontos verbunden wird, wenn die Adresse des Konfigurationsendgerätes (1.2) mit der öffentlichen Adresse übereinstimmt.

2. Verfahren zur Zuordnung nach Anspruch 1, **dadurch gekennzeichnet, dass** es einen Schritt des Erhaltens (4.4) durch das Benutzerendgerät (1.1) der öffentlichen Adresse bei einer Vorrichtung (1.4) aufweist, die an das erste Kommunikationsnetz angeschlossen wird.

3. Verfahren zur Zuordnung nach Anspruch 1, **dadurch gekennzeichnet, dass** der Schritt des Zuordnens einen Schritt des Suchens der Adresse des Konfigurationsendgerätes (1.2) unter einer Anordnung von öffentlichen Adressen, die durch die Zuordnungsvorrichtung (1.4) gespeichert und jeweils mit Kennungen der Benutzerendgeräte verbunden sind, aufweist.

4. Verfahren zur Zuordnung nach einem der Ansprüche 1 bis 3, **dadurch gekennzeichnet, dass** der Zugang zu dem Benutzerkonto aus einer Registrierung des Benutzerkontos bei einem Dienst, der von dem Server (1.5) umgesetzt wird, besteht.

5. Vorrichtung zur Zuordnung (1.4), die geeignet ist, ein Benutzerendgerät (1.1) zu einem Benutzerkonto eines Servers (1.5) zuzuordnen, wobei die Vorrichtung zur Zuordnung (1.4) an ein erstes Kommunikationsnetz (1.20) angeschlossen ist, wobei das erste Benutzerendgerät (1.1) über ein zweites Kommunikationsnetz (1.10) an eine Gateway (1.3) angeschlossen ist, die das erste und zweite Kommunikationsnetz verbindet, indem sie eine Adressumsetzung mit Hilfe von einer öffentlichen Adresse durchführt, die über das erste Kommunikationsnetz weiterleitbar ist, **dadurch gekennzeichnet, dass** sie Folgendes aufweist:
- Mittel zum Empfangen (3.2) von einer Nachricht, die die öffentliche Adresse und eine Kennung des Benutzerendgerätes (1.1) aufweist,
- Mittel zum Verbinden der öffentlichen Adresse und der Kennung des Benutzerendgerätes (1.1) mit einem Ablaufdatum,
- Mittel zum Löschen der öffentlichen Adresse und der Kennung des Benutzerendgerätes (1.1), wenn das Ablaufdatum überschritten ist,
- Mittel zum Empfangen (3.4) von dem Server (1.5) einer Benachrichtigung des Zugangs zu dem Benutzerkonto, wobei der Zugang ausgehend von einem Konfigurationsendgerät (1.2) erfolgt, das von dem Benutzerendgerät (1.1) verschieden ist und an das zweite Kommunikationsnetz angeschlossen ist, wobei die Benachrichtigung eine Adresse des Konfigurationsendgerätes (1.2), die über das erste Kommunikationsnetz weiterleitbar ist, und eine Kennung des Benutzerkontos aufweist,
- Mittel zum Zuordnen (3.6) des Benutzerendgerätes (1.1) zu dem Benutzerkonto, indem die Kennung des Benutzerendgerätes (1.1) mit der Kennung des Benutzerkontos verbunden wird, wenn die Adresse des Konfigurationsendgerätes (1.2) mit der öffentlichen Adresse übereinstimmt.

6. System (1.4, 1.5), **dadurch gekennzeichnet, dass** es Folgendes aufweist:
- eine Vorrichtung zur Zuordnung (1.4) nach Anspruch 5 und
- einen Server (1.5), auf dem sich das Benutzerkonto befindet, wobei der Server (1.5) Folgendes aufweist:
- Mittel zum Erfassen des Zugangs zu dem Benutzerkonto, der von einem Konfigurationsendgerät (1.2) durchgeführt wird, und
- Mittel zum Übertragen der Benachrichtigung des Zugangs zu der Vorrichtung zur Zuordnung (1.4).

7. Computerprogramm, **dadurch gekennzeichnet, dass** es Anweisungen zum Umsetzen des Verfahrens nach Anspruch 1 durch eine Vorrichtung zur Zuordnung (1.4), die einen Dienst umsetzt, aufweist, wenn das Programm von einem Prozessor der Vorrichtung zur Zuordnung (1.4) ausgeführt wird.

8. Speichermittel, **dadurch gekennzeichnet, dass** sie ein Computerprogramm speichern, das Anleitung zum Umsetzen des Verfahrens nach Anspruch 1 durch eine Vorrichtung zur Zuordnung (1.4), die einen Dienst umsetzt, aufweist, wenn das Programm von einem Prozessor der Vorrichtung zur Zuordnung (1.4) ausgeführt wird.

## Claims

1. Method for pairing a user terminal (1.1) and a user account on a server (1.5), the method being implemented by at least a pairing device (1.4) connected to a first communication network (1.20), said first terminal being connected via a second communication network (1.10) to a gateway (1.3) that interconnects the first and second communication networks by performing an address translation by means of a public address routable over the first communication network, **characterized in that** said pairing device (1.4) performs the steps:
• of receiving (3.2) a message comprising said public address in association with an identifier of the user terminal (1.1);
• of associating the public address and the identifier of the user terminal (1.1) with a lapsing instant;
• of deleting the public address and the identifier of the user terminal (1.1) when the lapsing instant has passed;
• of receiving (3.4), from the server (1.5), a notification of an access to said user account, said access being performed from a configuration terminal (1.2), distinct from the user terminal (1.1) and connected to the second communication network, the notification comprising an address of said configuration terminal (1.2) routable over said first communication network and an identifier of the user account;
• of pairing (3.6) the user terminal (1.1) and said user account by pairing the identifier of the user terminal (1.1) with an identifier of the user account if the address of said configuration terminal (1.2) coincides with said public address.

2. Pairing method according to claim 1, **characterized in that** it comprises a step of obtaining (4.4), by said user terminal (1.1), said public address from a device (1.4) connected to said first communication network.

3. Pairing method according to claim 1, **characterized in that** the pairing step comprises a seeking step, among a set of public addresses stored by said pairing device (1.4) and associated respectively with identifiers of user terminals, of said address of said configuration terminal (1.2).

4. Pairing method according to any one of claims 1 to 3, **characterized in that** the access to said user account consists in a registration of the user account to a service provided by the server (1.5).

5. Pairing device (1.4) adapted for pairing a user terminal (1.1) and a user account on a server (1.5), said pairing device (1.4) being connected to a first communication network (1.20), said user terminal (1.1) being connected via a second communication network (1.10) to a gateway (1.3) that interconnects the first and second communication networks by performing an address translation by means of a public address routable over the first communication network, **characterized in that** it comprises:
• means for receiving (3.2) a message comprising said public address and an identifier of the user terminal (1.1);
• means for associating the public address and the identifier of the user terminal (1.1) with a lapsing instant;
• means for deleting the public address and the identifier of the user terminal (1.1) when the lapsing instant has passed;
• means for receiving (3.4), from the server (1.5), a notification of an access to said user account, said access being performed from a configuration terminal (1.2), distinct from the user terminal (1.1) and connected to the second communication network, the notification comprising an address of said configuration terminal (1.2) routable over said first communication network and an identifier of the user account;
• means for pairing (3.6) the user terminal (1.1) and said user account by pairing the identifier of the user terminal (1.1) with the identifier of the user account, if the address of said configuration terminal (1.2) coincides with said public address.

6. System (1.4, 1.5), **characterized in that** it comprises:
• a pairing device (1.4) according to claim 5, and,
• a server (1.5) with the user account, the server (1.5) comprising:
o means for detecting access to said user account from a configuration terminal (1.2), and,
∘ means for transmission of the access notification to the pairing device (1.4).

7. Computer program, **characterized in that** it comprises instructions for implementing, by a pairing device (1.4) implementing a service, the method according to claim 1, when said computer program is executed by a processor of the pairing device (1.4).

8. Storage means, **characterized in that** they store a computer program comprising steps for implementing, by a pairing device (1.4) implementing a service, the method according to claim 1, when said computer program is executed by a processor of said pairing device (1.4).
